(19) Europäisches Patentamt
European Patent Office
Office européen des brevets

(11) **EP 0 520 513 B1**

(12) **EUROPÄISCHE PATENTSCHRIFT**

(45) Veröffentlichungstag und Bekanntmachung des Hinweises auf die Patenterteilung:
**20.08.1997   Patentblatt 1997/34**

(51) Int Cl.[6]: **G02B 13/16**, G02B 13/18

(21) Anmeldenummer: **92110965.8**

(22) Anmeldetag: **29.06.1992**

(54) **Objektiv**

Objective

Objectif

(84) Benannte Vertragsstaaten:
**DE FR IT**

(30) Priorität: **27.06.1991   DE 4121283**

(43) Veröffentlichungstag der Anmeldung:
**30.12.1992   Patentblatt 1992/53**

(73) Patentinhaber: **Optische Werke G. Rodenstock
80469 München (DE)**

(72) Erfinder:
• **Kröninger, Werner
W-8351 Künzing 1 (DE)**

• **Matern, Ulrich
W-8120 Weilheim (DE)**

(74) Vertreter: **Münich, Wilhelm, Dr. et al
Kanzlei Münich, Steinmann, Schiller
Wilhelm-Mayr-Str. 11
80689 München (DE)**

(56) Entgegenhaltungen:
**DE-A- 3 126 566          GB-A- 1 103 704
US-A- 4 076 390**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Objektiv, bei dem die Objektebene oder die Bildebene konkav gekrümmt ist, und die andere Ebene eben ist oder im Unendlichen liegt gemäß dem Oberbegriff des Patentanspruchs 1.

Ferner bezieht sich die Erfindung auf einen Bildverstärker mit einem derartigen Objektiv.

Ein Objektiv gemäß dem Oberbegriff des Patentanspruchs 1 ist aus der DE-A-31 26 566 bekannt. Dieses Objektiv wird zur Abbildung von gekrümmten Röntgenschirmen bzw. Bildverstärkern, die Röntgenröhren nachgeschaltet sind, auf Filmebenen oder dgl. oder zur Abbildung von ebenen Objekten auf gekrümmte Bildverstärkerröhren usw. verwendet.

Ferner wird in einer Reihe von Einsatzfällen das beispielsweise von einer gekrümmten Fläche ausgehende Licht zunächst in ein Parallelstrahlenbündel umgeformt, in dessen Lichtweg ein Strahlteiler-Spiegel oder dgl. angeordnet ist, der das Licht auf verschiedene Einheiten, wie beispielsweise eine Videokamera und eine Standbildkamera umlenkt bzw. aufteilt. Erst in dem auf den Spiegel folgenden Strahlengang erfolgt dann die eigentliche Abbildung, so daß eine Abbildung "ins Unendliche" bzw. "aus dem Unendlichen" erforderlich ist.

Der Erfindung liegt die Aufgabe zugrunde, ein gattungsgemäßes Objektiv derart weiterzubilden, daß bei vergleichsweise geringem Aufwand eine hochwertige Abbildungsqualität erhalten wird. Eine erfindungsgemäße Lösung dieser Aufgabe ist im Patentanspruchs 1 gekennzeichnet. Weiterbildungen der Erfindung sind Gegenstand der abhängigen Ansprüche. Ein Bildverstärker mit einem derartigen Objektiv ist Gegenstand der Ansprüche 12 f..

Erfindungsgemäß ist die mit der gekrümmten Ebene zusammenfallende Fläche des Objektivs eine sphärische Fläche. Durch die asphärische Fläche werden die Bildfehler korrigiert.

Bei Objektiven dieser Art ist eine Bildfeldkrümmung entgegen der üblichen Petzval-Krümmung erforderlich. Die Petzval-Krümmung ermittelt sich aus der Summe des Verhältnisses der Brennweiten der Einzellinsen zur Linsenbrechzahl. Durch die unübliche Krümmungsrichtung ergeben sich Schwierigkeiten bei der Bildfehlerkorrektur, die sich durch den Einsatz einer asphärischen Fläche nahe der Bildebene beheben lassen.

Durch die erfindungsgemäße Ausbildung kann die sphärische Fläche, die mit der Abbildungsfläche zusammenfällt, sphärisch sein. Die asphärische Fläche dient im Gegensatz zum Stand der Technik gemäß der DE-A-31 26 566 nicht zur Anpassung an die nichtsphärische Abbildungsfläche, sondern zur Korrektur der Bildfehler und insbesondere der Abweichung der Bildkrümmung.

Die asphärische Fläche kann dabei eine konvexe oder konkave Fläche sein, aus Herstellgründen ist es jedoch bevorzugt, wenn die asphärische Fläche eine konvexe Fläche ist.

Die asphärische Fläche kann eine allgemeine asphärische Fläche sein. Selbstverständlich kann die asphärische Fläche auch eine reine Kegel schnittfläche sein, deren konische Konstante CC der Beziehung

$$CC = |x|, \text{ mit } -5 < x < 5 \text{ genügt.}$$

Für die Brechzahl des Mediums zwischen der oder den asphärischen Flächen und der gekrümmten Fläche, d.h. der Objektfläche bzw. der Bildfläche kann gelten:

$$n = 1$$

$$n > 1$$

Insbesondere kann das Medium zwischen der asphärischen Fläche und Objekt- bzw. Bildfläche ein Glas mit der Brechzahl nd < 1.65 sein.

Weiterhin kann das Medium zwischen asphärischer Fläche und Objekt- bzw. Bildfläche aus Gläsern unterschiedlicher Brechzahlen und Dispersion bestehen, und durch Verkitten eine Einheit bilden oder durch ein Medium anderer Brechzahl unterbrochen werden.

Durch die im Anspruch 6 angegebene Brechkraftbeziehung, gemäß der für die Brechkraft $\Phi$ der der Bild- bzw. Objektfläche am nächsten liegenden beiden Linsenelemente gilt:

$$\Phi < 0,$$

erhält man eine besonders ausgewogene Verteilung der Brechkräfte über das Objektiv, die insbesondere die Anpassung der vom Objektiv weg gekrümmten Bild- bzw. Objektschale an die Vorgaben bei gleichzeitiger guter Korrektur

EP 0 520 513 B1

der Bildfehler, wie sphärische Aberration, Astigmatismus, Koma etc. erleichtert.

Bei einer besonders vorteilhaften, im Anspruch 7 angegebenen Weiterbildung befinden sich zwischen der asphärischen Fläche und der gekrümmten Bild- bzw. Objektfläche ein oder mehrere Linsenelemente, von denen mindestens eines die Bedingung erfüllt: $\Phi < 0$.

Hierdurch wird eine gute Bildfehlerkorrektur trotz der "unüblichen" Petvalsumme erreicht.

Hierzu trägt auch die Weiterbildung bei, gemäß der das Objektiv beabstandet von der gekrümmten Fläche ein Glied mit wenigstens zwei Elementen mit positiver Brechkraft und benachbart der gekrümmten Fläche ein Glied mit zwei Elementen mit positiver Brechkraft und zwei Elementen mit negativer Brechkraft aufweist.

Das erfindungsgemäße Objektiv ist besonders zum Einsatz in Bildverstärkern und insbesondere Röntgenbildverstärkern geeignet.

Bei diesem Anwendungsfall ist es von Vorteil, wenn das dem Objektfeld (= Bildfeld des Bildverstärkers) benachbarte Linsenelement zugleich das Austrittsfenster des Bildverstärkers ist und eine von Null verschiedene Brechkraft aufweist.

In diesem Fall kann das Linsenelement gleichzeitig Träger für eine für Elektronenstrahlen empfindliche Schicht sein.

Dabei ist es von besonderem Vorteil, daß das erfindungsgemäße Objektiv ohne besondere Korrekturmaßnahmen so ausgelegt werden kann, daß die Verzeichnung des Objektivs der Verzeichnung des Bildverstärkers entgegenwirkt.

Dabei ist es weiterhin vorteilhaft, wenn gemäß Anspruch 9 für das Verhältnis von Bild- bzw. Objektfelddurchmesser $2y'$ zu Bild- bzw. Objektfeldradius $r_B$ gilt:

$$| 2y'/r_B | < 1$$

Gemäß Anspruch 10 bilden die asphärische Fläche und die Bild- bzw. Objektfläche eine Linse, deren Mittendicke DL ausreicht, um zu verhindern, daß von der Bild- bzw. Objektfläche ausgehende Strahlen von der asphärischen Fläche auf die Bild- bzw. Objektfläche zurückreflektiert werden, wobei die Beziehung

$$D_L \geq D_{min}$$

gilt, und $D_{min}$ durch folgende Formel gegeben ist:

$$D_{min} = h_B/(tan(arcsin(1/n)) - P$$

$$P = r - \sqrt{(r^2 - h^2_B)}$$

$h_B$     maximale Bild- bzw. Objekthöhe
n     Brechungsindex der aus asphärischer Fläche und Objekt- bzw. Bildfläche gebildeten Linse
r     Bild- bzw. Objektflächenradius
P     Pfeilhöhe
$D_L$     tatsächliche Mittendicke der Linse
Dmin    Mindestmittendicke der Linse

Weiterhin kann für den Betrag des Verhältnisses des Radien von Bild- bzw. Objektfläche ($|R_B|$, $|R_0|$) zum Grundradius der Asphäre ($|G_{asph}|$) gelten:

$$1 \leq |R_B/G_{asph}| \leq 5$$

bzw.

$$1 \leq |R_o/G_{asph}| \leq 5$$

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird, und in der zeigen:

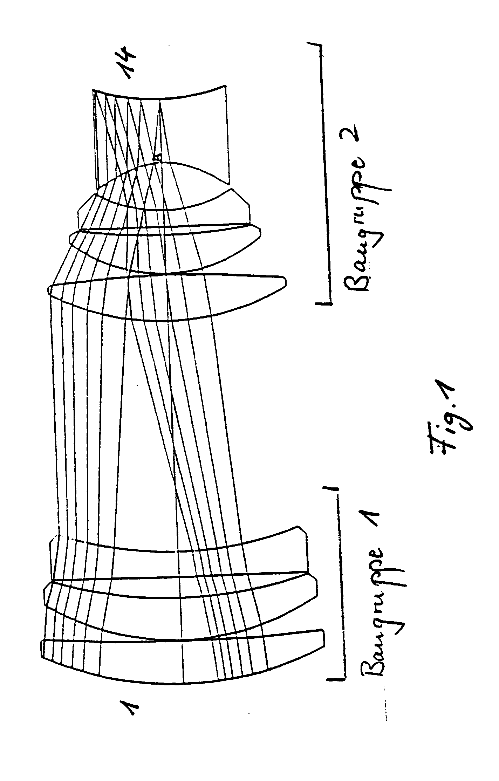

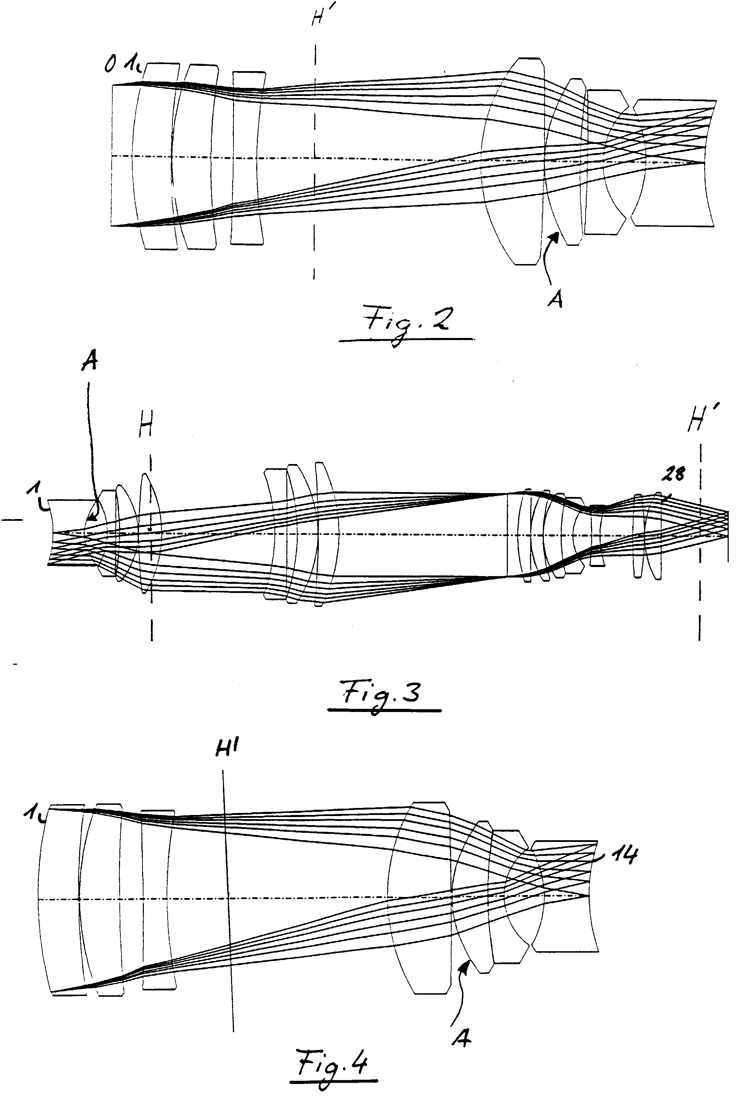

Fig. 1 bis 4  Linsenschnitte durch Ausführungsbeispiele eines erfindungsgemäßen Objektivs.

In den Figuren ist jeweils ein Linsenschnitt durch ein erfindungsgemäßes Objektiv sowie der jeweilige Strahlverlauf dargestellt, auf dessen Darstellung ausdrücklich Bezug genommen wird.

Die einzelnen Flächen des Objektivs sind mit 1 ... n durchnummeriert. Die Lage der sphärisch zu den - nicht immer -dargestellten Hauptebenen H und H' des Objektivs hin gekrümmte Objekt- oder Bildfläche ist den Figuren zu entnehmen. Mit 0 ist die Blendenebene bezeichnet. Die asphärische Fläche ist jeweils mit A bezeichnet.

In den jeweils zu den Figuren gleicher Nummer gehörenden Tabellen 1 bis 7 sind die Radien $r_i$ der i-ten Fläche und die Linsendicken bzw. die Luftabstände $d_i$ zwischen der i-ten Fläche und der (i+1)-ten Fläche angegeben. Ferner sind der Brechungsindex $n_i$ und die Abbe'sche Zahl $v_i$ für das zwischen der i-ten und der (i+1)-ten Fläche befindliche Medium für die d-Linie angegeben. Die Daten sind auf zwei bzw. eine Stelle hinter dem Komma gerundet. Zum Teil sind auch die Glasnummern entsprechend der Bezeichnung von Schott angegeben.

Bei den gezeigten Ausführungsbeispiel sind die in der folgenden Aufstellung angegebenen Flächen die asphärische Fläche, die durch die folgende Gleichung dargestellt wird:

$$z = CV*h^2/(1 + (1-(CC+1)*CV^2*h^2)^{1/2}) + \Sigma\ AC^x*h^x$$

z       Pfeilhöhe, d.h. Abstand eines Punktes auf der Fläche mit der Höhe h vom Scheitel in Richtung der optischen Achse

CV      Krümmung

CC      konische Konstante mit CC = |x|, für -5 < x < 5

$AC^x$,    Asphärenkoeffizienten mit x = 4, 6,...,20,..

In der Aufstellung ist ferner der Wert der konischen Konstante CC sowie der Asphärenkoeffizienten $AC^x$ angegeben. Dabei bedeutet die Angabe xxxxxE-y, daß der Asphärenkoeffizient $AC^y$ den Wert xxxxx * $10^{-y}$ hat. Nicht aufgeführte Größen haben den Wert Null.

Der Grundradius r = 1/CV der asphärischen Flächen ist in den jeweiligen Tabellen angegeben.

| Bspl. | Flächen-Nr. | konische Konstante und/oder $AC^x$ |
|---|---|---|
| 1 | 13 | CC= -2,056 |
| 2 | 9 | 0,292E-06, -0,122E-09, -0,292E-13 -0,105E-16, -0,867E-20 |
| 3 | 2 | CC= -2.06 |
| 4 | 9 | -0,445E-06, -0,13 E-09, -0,176E-12 -0,176E-17, -0,333E-19 |

Tabelle 1

|  | r | d | n | v |
|---|---|---|---|---|
| 0 | ∞ | 82,00 | Blende | |
| 1 | 75,93 | 10,00 | 1,62 | 60,1 |
| 2 | 332,56 | 0,30 | 1 | |
| 3 | 58,90 | 10,00 | 1,69 | 54,7 |
| 4 | 96,26 | 4,92 | 1 | |
| 5 | 1311,7 | 6,00 | 1,81 | 25,4 |
| 6 | 82,57 | 55,00 | 1 | |
| 7 | 56,32 | 11,00 | 1,69 | 54,7 |
| 8 | -250,13 | 0,30 | 1 | |
| 9 | 35,58 | 9,00 | 1,64 | 55,4 |

Tabelle 1   (fortgesetzt)

|    | r      | d     | n    | v    |
|----|--------|-------|------|------|
| 10 | 119,71 | 1,92  | 1    |      |
| 11 | 2108,6 | 4,00  | 1,69 | 31,2 |
| 12 | 29,96  | 11,38 | 1    |      |
| 13 | -17,80 | 15,00 | 1,52 | 64,3 |
| 14 | 45,00  |       |      |      |

Tabelle 2

|    | r         | d      | Glasbezeichnung |
|----|-----------|--------|-----------------|
| 0  | unendlich | 10,04  |                 |
| 1  | 141,63    | 18,93  | SK 55           |
| 2  | 255,08    | 0,481  |                 |
| 3  | 119,39    | 18,77  | LaK9            |
| 4  | 271,20    | 10,67  |                 |
| 5  | -1492,91  | 11,48  | SF6             |
| 6  | 204,41    | 109,15 |                 |
| 7  | 76,96     | 30,67  | LaK9            |
| 8  | -1361,11  | 0,21   |                 |
| 9  | 63,62     | 17,61  | SKN18           |
| 10 | 278,59    | 3,62   |                 |
| 11 | -921,22   | 7,59   | SF8             |
| 12 | 35,60     | 20,67  |                 |
| 13 | -52,95    | 28,46  | BK7             |
| 14 | 85,38     |        |                 |

## T a b e l l e   3

|   | r        | d     | Glasbezeichnung |
|---|----------|-------|-----------------|
| 1 | -45,00   | 15,00 | BK7             |
| 2 | 17,80    | 11,38 |                 |
| 3 | -29,96   | 4,00  | SF8             |
| 4 | -2108,58 | 1,92  |                 |
| 5 | -119,72  | 9,00  | SKN18           |
| 6 | 35,58    | 0,30  |                 |
| 7 | 250,13   | 11,00 | LaK9            |
| 8 | -56,32   | 55,00 |                 |

| | r | d | |
|---|---|---|---|
| 9 | -82,57 | 6,00 | SF6 |
| 10 | -1311,74 | 4,92 | |
| 11 | -96,26 | 10,0 | LaK9 |
| 12 | -58,90 | 0,30 | |
| 13 | -332,56 | 10,00 | SK55 |
| 14 | -75,93 | 82,00 | |
| 15 | unendl. | 5,00 | Blende |
| 16 | 73,65 | 6,15 | LaK9 |
| 17 | 865,96 | 0,10 | |
| 18 | 42,32 | 5,85 | LaK9 |
| 19 | 64,01 | 0,20 | |
| 20 | 35,35 | 8,75 | LaF2 |
| 21 | 77,74 | 5,80 | SF4 |
| 22 | 20,91 | 9,25 | |
| 23 | -126,35 | 4,10 | SF55 |
| 24 | 45,15 | 16,00 | |
| 25 | 263,22 | 5,65 | LaK9 |
| 26 | -123,65 | 0,10 | |
| 27 | 41,87 | 8,20 | LaK9 |
| 28 | 4355,71 | | |
| | | 38,81 | Bildebene |

## T a b e l l e  4

| | r | d | Glasbezeichnung |
|---|---|---|---|
| 1 | 171,05 | 19,46 | SK55 |
| 2 | 301,91 | 0,58 | |
| 3 | 123,76 | 19,46 | LaK9 |
| 4 | 569,06 | 11,50 | |
| 5 | -1486,11 | 11,67 | SF6 |
| 6 | 201,60 | 107,00 | |
| 7 | 85,81 | 31,13 | LaK9 |

| 8 | −2381,02 | 0,58 | |
|---|---|---|---|
| 9 | 51,15 | 17,51 | SKN18 |
| 10 | 218,11 | 0 | |
| 11 | 170,22 | 7,78 | SF8 |
| 12 | 28,65 | 19,14 | |
| 13 | −44,96 | 22,00 | BK7 |
| 14 | 80,00 | | |

Vorstehend ist die Erfindung anhand von Ausführungsbeispielen ohne Beschränkung der allgemeinen Anwendbarkeit beschrieben worden.

**Patentansprüche**

1. Objektiv, bei dem die Objektebene oder die Bildebene konkav gekrümmt ist, und die andere Ebene eben ist oder im Unendlichen liegt,
bestehend aus zwei Baugruppen, von denen jede wenigstens zwei Linsen aufweist, und von denen die der gekrümmten Ebene am nächsten liegende Baugruppe eine asphärischrotationssymmetrische Fläche aufweist,
dadurch **gekennzeichnet**, daß die mit der gekrümmten Ebene zusammenfallende Fläche des Objektivs eine sphärische Fläche ist, und daß durch die asphärische Fläche die Bildfehler korrigiert werden.

2. Objektiv nach Anspruch 1,
dadurch **gekennzeichnet**, daß die asphärische Fläche eine konvexe Fläche ist.

3. Objektiv nach Anspruch 1,
dadurch **gekennzeichnet**, daß die asphärische Fläche eine konkave Fläche ist.

4. Objektiv nach einem der Ansprüche 1 bis 3,
dadurch **gekennzeichnet**, daß das Medium zwischen asphärischer Fläche und Objekt- bzw. Bildfläche aus Gläsern unterschiedlicher Brechzahlen und Dispersion besteht, und durch Verkitten eine Einheit bildet.

5. Objektiv nach einem der Ansprüche 1 bis 4,
dadurch **gekennzeichnet**, daß das Medium zwischen asphärischer Fläche und Objekt- bzw. Bildfläche durch ein Medium anderer Brechzahl unterbrochen wird.

6. Objektiv nach einem der Ansprüche 1 bis 5,
dadurch **gekennzeichnet**, daß für die Brechkraft $\Phi$ der der gekrümmten Bild- bzw. Objektfläche am nächsten liegenden beiden Linsenelemente gilt: $\Phi < 0$.

7. Objektiv nach einem der Ansprüche 1 bis 6,
dadurch **gekennzeichnet**, daß sich zwischen der asphärischen Fläche und der gekrümmten Bild- bzw. Objektfläche ein oder mehrere Linsenelemente befinden, von denen mindestens eines die Bedingung erfüllt: $\Phi < 0$.

8. Objektiv nach einem der Ansprüche 1 bis 7,
dadurch **gekennzeichnet**, daß das Objektiv beabstandet von der gekrümmten Fläche ein Glied mit wenigstens zwei Elementen mit positiver Brechkraft und benachbart der gekrümmten Fläche ein Glied mit zwei Elementen mit positiver Brechkraft und zwei Elementen mit negativer Brechkraft aufweist.

9. Objektiv nach einem der Ansprüche 1 bis 8,
dadurch **gekennzeichnet**, daß für das Verhältnis von Bild bzw. Objektfelddurchmesser 2y' zu Bild- bzw. Objekt-Objektfeldradius $r_B$ gilt:

7

$$| 2y'/r_B | < 1.$$

10. Objektiv nach einem der Ansprüche 1 bis 9,
dadurch **gekennzeichnet**, daß die asphärische Fläche und die gekrümmte Bild- bzw. Objektfläche eine Linse bilden, deren Mittendicke DL ausreicht um zu verhindern, daß von der Bild- bzw. Objektfläche ausgehende Strahlen von der asphärischen Fläche auf die Bild- bzw. Objektfläche zurückreflektiert werden, wobei die Beziehung

$$D_L \geq D_{min}$$

gilt, und $D_{min}$ durch folgende Formel gegeben ist:

$$D_{min} = h_B/(\tan(\arcsin(1/n)) - P$$

$$P = r - \sqrt{(r^2 - h^2{}_B)}$$

$h_B$      maximale Bild- bzw. Objekthöhe
n      Brechungsindex der aus asphärischer Fläche und Objekt- bzw. Bildfläche gebildeten Linse
r      Bild- bzw. Objektflächenradius
P      Pfeilhöhe
$D_L$      tatsächliche Mittendicke der Linse
Dmin      Mindestmittendicke der Linse

11. Objektiv nach einem der Ansprüche 1 bis 10, dadurch **gekennzeichnet**, daß für den Betrag des Verhältnisses der Radien von Bild- bzw. Objektfläche ($|R_B|$, $|R_O|$) zum Grundradius der asphärischen Fläche ($|G_{asph}|$) gilt:

$$1 \leq |R_B /G_{asph}| \leq 5$$

bzw.

$$1 \leq |R_O /G_{asph}| \leq 5$$

12. Bildverstärker mit einem Objektiv nach einem der Ansprüche 1 bis 11,
bei dem die gekrümmte Fläche das Bildfeld eines Bildverstärkers und insbesondere eines Röntgenbildverstärkers ist.

13. Bildverstärker nach Anspruch 12,
bei dem das dem Objektfeld benachbarte Linsenelement zugleich das Austrittsfenster des Bildverstärkers ist und eine von Null verschiedene Brechkraft aufweist.

14. Bildverstärker nach Anspruch 13,
bei dem dieses Linsenelement gleichzeitig Träger für eine für Elektronenstrahlen empfindliche Schicht ist.

15. Bildverstärker nach einem der Ansprüche 12 bis 14,
bei dem die Verzeichnung des Objektivs der Verzeichnung des Bildverstärkers entgegenwirkt.

16. Bildverstärker nach einem der Ansprüche 12 bis 15,
bei dem das Medium zwischen asphärischer Fläche und Objekt- bzw. Bildfläche ein Glas mit der Brechzahl

$$nd < 1.65 \text{ ist.}$$

## Claims

1. An objective in which the object plane or the image plane is concavely curved and the other plane is flat or lies at infinity,
consisting of two element groups, of which each comprises at least two lenses and of which the element group closest to the curved plane has an aspherical surface with rotational symmetry,
characterized in that the surface of the objective coinciding with the curved plane is a spherical surface and in that the distortion of the image is corrected by the aspherical surface.

2. An objective according to claim 1, characterized in that the aspherical surface is a convex surface.

3. An objective according to claim 1, characterized in that the aspherical surface is a concave surface.

4. An objective according to any of claims 1 to 3, characterized in that the medium between aspherical surface and object or image surface consists of glasses with different refractive indices and dispersion and forms an element by cementing together.

5. An objective according to any of claims 1 to 4, characterized in that the medium between aspherical surface and object or image surface is interrupted by a medium with a different refractive index.

6. An objective according to any of claims 1 to 5, characterized in that $\phi < 0$ applies for the refractive power $\phi$ of the two lens elements lying closest to the curved image or object surface.

7. An objective according to any of claims 1 to 6, characterized in that one or more lens elements are located between the aspherical surface and the curved image or object surface, at least one of which elements satisfies the condition $\phi < 0$.

8. An objective according to any of claims 1 to 7, characterized in that the objective comprises a body spaced from the curved surface with at least two elements with positive refractive power and a body adjacent the curved surface with two elements with positive refractive power and two elements with negative refractive power.

9. An objective according to any of claims 1 to 8, characterized in that the following applies for the relationship of image or object field diameter 2y' to the image or object to object field radius $r_B$:

$$| 2y'/r_B | < 1.$$

10. An objective according to any of claims 1 to 9, characterized in that the aspherical surface and the curved image or object surface form a lens whose central thickness $D_L$ is sufficient to prevent rays emanating from the image or object surface being reflected back by the aspherical surface to the image or object surface, wherein the relationship applies:

$$D_L \geq D_{min}$$

and $D_{min}$ is given by the following formula:

$$D_{min} = h_B/(tan(arcsin(1/n)) - P$$

$$P = r - \sqrt{/(r^2 - h_B^2)}$$

| $h_B$ | maximum image or object height |
|---|---|
| n | refractive index of the lens formed by the aspherical surface and the object or image surface |
| r | image or object surface radius |
| P | sagitta |
| $D_L$ | actual central thickness of the lens |

$D_{min}$     smallest central thickness of the lens.

11. An objective according to any of claims 1 to 10, characterized in that in respect of the value of the ratio of the radii of the image and object surface ($IR_B I$, $IR_O I$) to the base radius of the aspherical surface ($IG_{asph} I$) there applies, respectively:

$$1 \leq IR_B/G_{asph} I \leq 5$$

and

$$1 \leq IR_O/G_{asph} I \leq 5.$$

12. An image intensifier with an objective according to any of claims 1 to 11, in which the curved surface is the image field of an image intensifier and in particular an X-ray image intensifier.

13. An image intensifier according to claim 12, in which the lens element adjacent to the object field is at the same time the exit window of the image intensifier and has a refractive power different from zero.

14. An image intensifier according to claim 13, in which this lens element is at the same time the substrate for a coating sensitive to electron beams.

15. An image intensifier according to any of claims 12 to 14, in which the distortion of the objective counteracts the distortion of the image intensifier.

16. An image intensifier according to any of claims 12 to 15, in which the medium between the aspherical surface and the object or image surface is a glass with the refractive index nd < 1.65.

**Revendications**

1. Objectif, dans le cas duquel le plan de l'objectif ou le plan de l'image a une incurvation concave, et l'autre plan est plat ou se situe à l'infini,
objectif consistant en deux sous-ensembles, dont chacun présente au moins deux lentilles, et dont le sous-ensemble se situant le plus près du plan incurvé présente une surface asphérique à symétrie de rotation,
objectif caractérisé en ce que la surface de l'objectif correspondant au plan incurvé est une surface sphérique, et les défauts de l'image sont corrigés par la surface asphérique.

2. Objectif selon la revendication 1, caractérisé en ce que la surface asphérique est une surface convexe.

3. Objectif selon la revendication 1, caractérisé en ce que la surface asphérique est une surface concave.

4. Objectif selon l'une des revendications 1 à 3, caractérisé en ce que le milieu situé entre la surface asphérique et la surface de l'objet ou de l'image consiste en des verres ayant différents indices de réfraction et de dispersion, et ce milieu forme une unité par collage.

5. Objectif selon l'une des revendications 1 à 4, caractérisé en ce que le milieu situé entre la surface asphérique et la surface de l'objet ou la surface de l'image est interrompu par un milieu ayant un autre indice de réfraction.

6. Objectif selon l'une des revendications 1 à 5, caractérisé en ce que la relation $\phi < 0$ vaut pour la réfringence ou la force de réfraction $\phi$ des deux éléments de lentille les plus voisins de la surface incurvée de l'image ou de l'objectif.

7. Objectif selon l'une des revendications 1 à 6, caractérisé en ce qu'entre la surface asphérique et la surface incurvée d'image ou d'objectif, il y a un ou plusieurs éléments de lentille dont l'un au moins répond à la condition: $\phi < 0$.

8. Objectif selon l'une des revendications 1 à 7, caractérisé en ce qu'il présente, du côté éloigné de la surface incurvée, une partie comportant au moins deux éléments à réfringence positive et, du côté voisin de la surface incurvée, une partie comportant deux éléments à réfringence positive et deux éléments à réfringence négative.

9.  Objectif selon l'une des revendications 1 à 8, caractérisé en ce que la relation:

$$| 2y'/r_\beta | < 1$$

vaut pour le rapport entre le diamètre de champ de l'image ou de l'objet, 2y', et le rayon du champ de l'image ou de l'objet $r_\beta$.

10. Objectif selon l'une des revendications 1 à 9, caractérisé en ce que la surface asphérique et la surface incurvée de l'image ou de l'objet forment une lentille dont l'épaisseur médiane $D_L$ suffit pour empêcher que les rayons provenant de la surface de l'image ou de l'objet ne soient renvoyés par réflexion de la surface asphérique sur la surface de l'image ou de l'objet, ce qui rend valable la relation:

$$D_L \geq D_{min}$$

et $D_{min}$ est donné par la formule suivante:

$$D_{min} = h_B/(tg(arcsin(1/n)) - P$$

avec:

$$P = r - \sqrt{(r^2 - h^2{}_B)}$$

$h_\beta$:     hauteur maximale d'image ou de l'objet
n:     indice de réfraction de la lentille formée de la surface asphérique et de la surface de l'objet ou de l'imaqe
r :     rayon de la surface de l'image ou de l'objet
P :     hauteur de flèche
$D_L$ :     épaisseur médiane réelle de la lentille
$D_{min}$ :     épaisseur médiane minimale de la lentille.

11. Objectif selon l'une des revendications 1 à 10, caractérisé en ce que les relations:

$$1 \leq | R_B/G_{asph} | \leq 5$$

ou

$$1 \leq | R_O/G_{asph} | \leq 5$$

valent pour donner la valeur du rapport entre les rayons de la surface d'image ou d'objet ($|R_B|$, $|R_O|$) et le rayon de base de la surface asphérique ($|G_{asph}|$).

12. Amplificateur d'intensité d'image comportant un objectif selon l'une des revendications 1 à 11, dans le cas duquel la surface incurvée constitue le champ d'image d'un amplificateur d'image et en particulier d'un amplificateur de l'intensité de rayons X.

13. Amplificateur d'intensité d'image selon la revendication 12, dans le cas duquel l'élément de lentille le plus voisin du champ de l'objet constitue également la fenêtre de sortie de l'amplificateur d'intensité d'image et présente une réfringence différente de zéro.

14. Amplificateur d'intensité d'image selon la revendication 13, dans le cas duquel cet élément de lentille constitue en même temps le support d'une couche sensible aux rayons ou faisceaux d'électrons.

15. Amplificateur d'intensité d'image selon l'une des revendications 12 à 14, dans le cas duquel la distorsion de l'objectif agit en sens inverse de la distorsion de l'amplificateur d'image.

16. Amplificateur d'image selon l'une des revendications 11 à 15, dans le cas duquel le milieu situé entre la surface asphérique et la surface de l'objet ou de l'image est un verre dont l'indice de réfraction nd est < 1,65.

Fig.1

EP 0 520 513 B1

*Fig. 2*

*Fig. 3*

*Fig. 4*